# FASCICULE DE BREVET EUROPEEN

(11) **EP 3 157 648 B1**
(45) Date de publication et mention de la délivrance du brevet: **25.11.2020**
(21) Numéro de dépôt: 15732818.8
(22) Date de dépôt: 29.05.2015
(51) Int. Cl.: B01D 36/00, B01D 35/18

(54) **FILTRE À CARBURANT SÉPARATEUR D'EAU ET ÉLÉMENT FILTRANT AVEC DÉTECTEUR D'EAU.**
WASSERTRENNENDER BRENNSTOFFFILTER UND FILTRIERUNGSELEMENT MIT EINEM WASSERDETEKTOR
WATER-SEPARATING FUEL FILTER AND FILTERING ELEMENT HAVING A WATER DETECTOR

(30) Priorité: 17.06.2014 FR 1455545
(43) Date de publication de la demande: 26.04.2017
(73) Titulaire: SOGEFI FILTRATION, 78280 Guyancourt (FR)
(72) Inventeur: BLAN, Philippe, 78990 Elancourt (FR); PASQUIER, Franck, 78180 Montigny le Bretonneux (FR); SCHWARTZ, Laurent, 78280 Guyancourt (FR); REPERANT, Romain, 95240 Cormeilles en Parisis (FR)
(74) Mandataire: Plasseraud IP
(86) Numéro de dépôt international: PCT/FR2015/051418
(87) Numéro de publication internationale: WO 2015/193574

(56) Documents cités:
- DE-A1-102008 043 197
- DE-A1-102011 078 362

## Description

### DOMAINE TECHNIQUE DE L'INVENTION

La présente invention est relative aux filtres à liquide, et en particulier aux filtres à carburant (typiquement gazole) séparant l'eau contenue dans le carburant et comportant un compartiment inférieur pour collecter cette eau.

Plus particulièrement, l'invention concerne un filtre à carburant séparateur d'eau selon la revendication 1 et un insert filtrant selon la revendication 11 pour ledit filtre à carburant séparateur d'eau.

### ARRIERE-PLAN TECHNOLOGIQUE DE L'INVENTION

Le document FR 2 868 331 décrit un exemple d'un tel filtre à carburant, en particulier à gazole, utilisé dans des véhicules à moteur à explosion (domaine automobile notamment). Dans ce filtre, l'élément filtrant forme une cartouche et est placé suffisamment à distance du fond (voir figures 2 et 5 de ce document) pour permettre une collecte de l'eau séparée. L'élément filtrant est monté de façon telle que le seul circuit possible pour le carburant de l'entrée à la sortie passe à travers le média filtrant, depuis un espace annulaire externe vers l'espace intérieur. L'eau est séparée du côté externe du média filtrant et les gouttes tombent sur le fond du boîtier. Lorsque l'eau accumulée au fond est en dessous d'un certain niveau correspondant à des sondes du capteur (extrémités inférieures des sondes entièrement immergées dans le carburant, typiquement du gazole), les sondes sont sensiblement isolées électriquement l'une de l'autre. A l'inverse, dès que le niveau d'eau atteint les extrémités inférieures, la résistance électrique entre les deux sondes chute brutalement et cette information ou mesure de résistivité peut alors être envoyée à une unité centrale de calcul ou à un circuit imprimé pouvant être agencé du côté de l'extrémité supérieure du filtre.

Un intérêt de ce type de filtre est qu'il permet de centraliser dans un composant électronique plusieurs fonctions, par exemple de chauffage du carburant à filtrer dans la zone amont et le traitement des signaux de détection du capteur de niveau d'eau.

Le filtre du document FR 2 868 331 requiert un certain dégagement autour du filtre (en particulier du côté inférieur), afin de pouvoir réaliser l'opération de rechange de l'élément filtrant. En pratique dans l'environnement encombré sous le capot moteur, il est plus avantageux de pouvoir extraire l'élément filtrant par le dessus.

Le document DE 10 2008 043197 montre un composant de détection d'eau qui s'ajuste, par le dessus, sur l'élément filtrant et présente en périphérie de cet élément des lignes pourvues de bornes inférieures pour réaliser la détection d'un niveau d'eau. L'extrémité inférieure du média filtrant est évidemment fermée hermétiquement pour obliger le flux de carburant brut à traverser le média filtrant selon un flux centripète. Dans un tel filtre, les bornes inférieures de détection s'étendent dans une zone où circule le carburant brut (non filtré). Avec un tel agencement, les impuretés peuvent interférer avec le composant de détection d'eau, ce qui risque d'altérer le bon fonctionnement du filtre, et il n'est pas possible de collecter de l'eau propre au fond du boîtier. Par ailleurs, le boîtier de filtre est fermé par sertissage, de sorte qu'il n'est pas permis de réutiliser le boîtier avec un élément filtrant de rechange.

Le document DE 10 2011 078 362 A1 divulgue fig.2 un filtre à carburant comportant un capteur de niveau d'eau.

Il est également connu, par exemple par le brevet EP 2 181 747 B1, d'intégrer un capteur de niveau d'eau dans un composant fonctionnel insérable par le dessus, comme une tige de purge. Cependant, il n'est pas permis dans ce cas de réutiliser la totalité du boîtier, seule une tête de filtre étant conservée. De plus, la hauteur du composant fonctionnel implique de disposer d'un dégagement vertical important pour pouvoir séparer complètement ce composant (tige de purge) de la remplaçable.

### DESCRIPTION GENERALE DE L'INVENTION

Il existe donc un besoin pour des filtres disposant de fonctions efficaces de séparation d'eau, avec détection de niveau d'eau, et offrant une plus grande facilité d'accès pour l'opération de rechange, tout en permettant de changer seulement l'élément filtrant insérable dans le boîtier externe du filtre.

La présente invention vise à pallier un ou plusieurs des inconvénients précités, tout en conservant l'avantage d'une fonction efficace de détection d'eau.

A cet effet, il est proposé selon l'invention un filtre à carburant séparateur d'eau **tel que défini dans la revendication 1.**

Grâce à cet agencement qui permet une détection de niveau d'eau dans le compartiment inférieur, on facilite l'opération de rechange de la cartouche du fait que le couvercle déplaçable (et formant typiquement une tête de filtre) présente un moindre encombrement. Le couvercle qui inclut typiquement l'entrée et la sortie de carburant est réutilisable.

La position relative de l'interface de connexion par rapport au média filtrant est ainsi prédéterminée par la conception de l'élément filtrant, indépendamment des éléments utilisés pour former le boîtier. Le capteur, situé dans une position basse dans la zone aval, est relié par le dessous à l'interface de connexion (typiquement via l'espace intérieur) sans que cette liaison interfère avec la zone d'étanchéité réalisée du côté du flasque inférieur par un contact annulaire étanche avec une paroi du boîtier externe.

De manière très avantageuse, la détection d'eau est réalisée du côté de la zone en aval de la filtration, sans impuretés, ce qui permet d'éviter des risques de dégradation de la détection. On supprime aussi les problèmes de contamination de la zone de décantation d'eau (zone en aval du filtre dans le cas d'une séparation d'eau côté propre) lors des opérations de maintenance du filtre.

Selon une particularité, l'ensemble à ligne conductrice s'étend longitudinalement dans l'espace intérieur jusqu'à l'interface de connexion et est maintenu dans l'espace intérieur en étant supporté par un fourreau qui appartient à l'élément filtrant.

De préférence, le flasque inférieur présente une portion radiale d'étanchéité de forme annulaire qui s'étend radialement depuis un premier bord annulaire sous-jacent par rapport à la face interne du média filtrant jusqu'à un deuxième bord annulaire périphérique qui s'étend au-delà de la face externe du média filtrant, le premier pôle électrique et le deuxième pôle électrique du capteur étant définis par une paire d'électrodes de détection qui s'étendent entre l'axe longitudinal et le premier bord annulaire, de préférence en étant plus proches de l'axe longitudinal que du premier bord annulaire. Avec cet agencement des électrodes au plus près de l'axe longitudinal (qui est typiquement un axe central de l'élément filtrant), on limite considérablement le risque de détériorer les électrodes par un choc lors de l'insertion de l'élément filtrant dans le bol. Le deuxième bord annulaire peut définir un diamètre externe ou dimension caractéristique analogue de l'élément filtrant.

Dans divers modes de réalisation du filtre selon l'invention, on peut éventuellement avoir recours en outre à l'une et/ou à l'autre des dispositions suivantes :
- un guidage est obtenu par coopération entre le deuxième bord annulaire du flasque inférieur, optionnellement pourvu d'un joint d'étanchéité radiale, et la paroi latérale du bol ;
- le flasque supérieur est plus petit que le flasque inférieur pour permettre à une extrémité inférieure d'étanchéité du couvercle de s'insérer intérieurement par rapport à la paroi latérale du bol ;
   rapport au bol ;
- le bol forme une partie stationnaire du filtre et comporte des moyens externes de fixation, ce grâce à quoi le bol peut être fixement solidaire d'un moteur à combustion interne pendant une opération de remplacement de l'élément filtrant.

Par ailleurs, l'invention a également pour objet un insert filtrant adapté pour réaliser la séparation d'eau dans un filtre selon l'invention, dans le but de simplifier l'opération de rechange.

A cet effet il est proposé un insert filtrant d'un seul tenant (monobloc) adapté pour coopérer dans le filtre à carburant séparateur d'eau, en formant l'élément filtrant, et tel que défini dans la revendication 11. Autrement dit, on obtient avantageusement un insert filtrant qui cumule les fonctions de séparation des impuretés du côté de la face externe du média, séparation d'eau du côté interne du média, capteur de niveau d'eau du côté du flasque inférieur, et interface (typiquement centrale) de connexion amovible à deux bornes du côté du flasque supérieur pour transmettre le signal de détection du capteur.

On comprend que l'ensemble à ligne conductrice est monté dans l'espace intérieur, typiquement sans pouvoir être retiré. Le capteur peut présenter des électrodes de détection particulièrement bien protégées vis-à-vis des chocs lors du montage et situées du côté de la zone propre, sans particules et impuretés susceptibles de causer des erreurs de détection.

### BREVE DESCRIPTION DES DESSINS

D'autres caractéristiques et avantages de l'invention apparaîtront au cours de la description suivante de plusieurs de ses modes de réalisation, donnés à titre d'exemples non limitatifs, en regard des dessins joints dans lesquels :
- la figure 1 est une vue en coupe illustrant un filtre selon un mode de réalisation préféré de l'invention ;
- la figure 2 représente des composants séparés du filtre de la figure 1, dont l'élément filtrant amovible ;
- la figure 3 est une vue en coupe illustrant une ossature de l'élément filtrant montré sur la figure 2 ;
- la figure 4 montre extérieurement le filtre de la figure 1, avec un arraché permettant de voir une partie de l'ensemble à ligne conductrice servant à détecter le niveau d'eau ; et
- la figure 5 est une vue de dessus de l'élément filtrant dans une forme de rapport au bol ;
- le bol forme une partie stationnaire du filtre et comporte des moyens externes de fixation, ce grâce à quoi le bol peut être fixement solidaire d'un moteur à combustion interne pendant une opération de remplacement de l'élément filtrant.

Par ailleurs, l'invention a également pour objet un insert filtrant adapté pour réaliser la séparation d'eau dans un filtre selon l'invention, dans le but de simplifier l'opération de rechange.

A cet effet il est proposé un insert filtrant d'un seul tenant (monobloc) adapté pour coopérer dans le filtre à carburant séparateur d'eau, en formant l'élément filtrant. Autrement dit, on obtient avantageusement un insert filtrant qui cumule les fonctions de séparation des impuretés du côté de la face externe du média, séparation d'eau du côté interne du média, capteur de niveau d'eau du côté du flasque inférieur, et interface (typiquement centrale) de connexion amovible à deux bornes du côté du flasque supérieur pour transmettre le signal de détection du capteur.

On comprend que l'ensemble à ligne conductrice est monté dans l'espace intérieur, typiquement sans pouvoir être retiré. Le capteur peut présenter des électrodes de détection particulièrement bien protégées vis-à-vis des chocs lors du montage et situées du côté de la zone propre, sans particules et impuretés susceptibles de causer des erreurs de détection.

### BREVE DESCRIPTION DES DESSINS

D'autres caractéristiques et avantages de l'invention apparaîtront au cours de la description suivante de plusieurs de ses modes de réalisation, donnés à titre d'exemples non limitatifs, en regard des dessins joints dans lesquels :

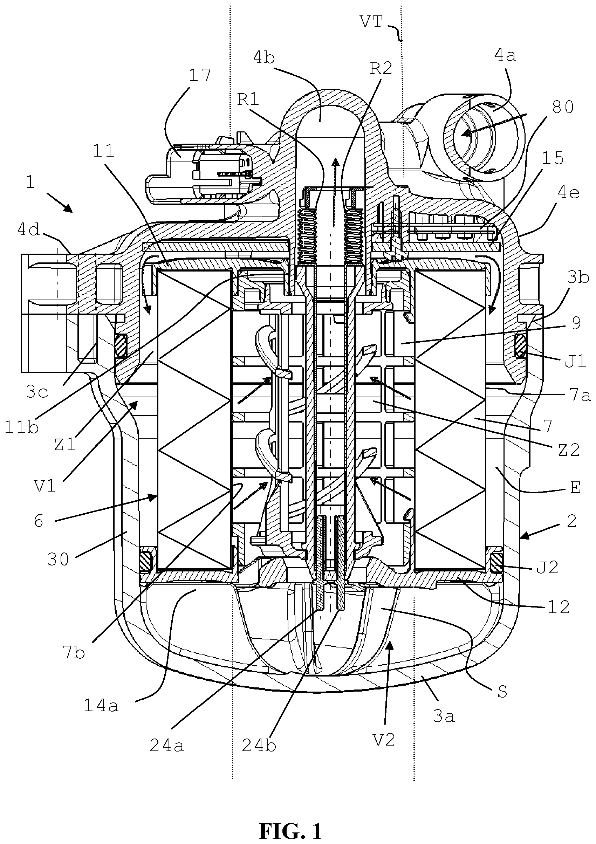

- la figure 1 est une vue en coupe illustrant un filtre selon un mode de réalisation préféré de l'invention ;

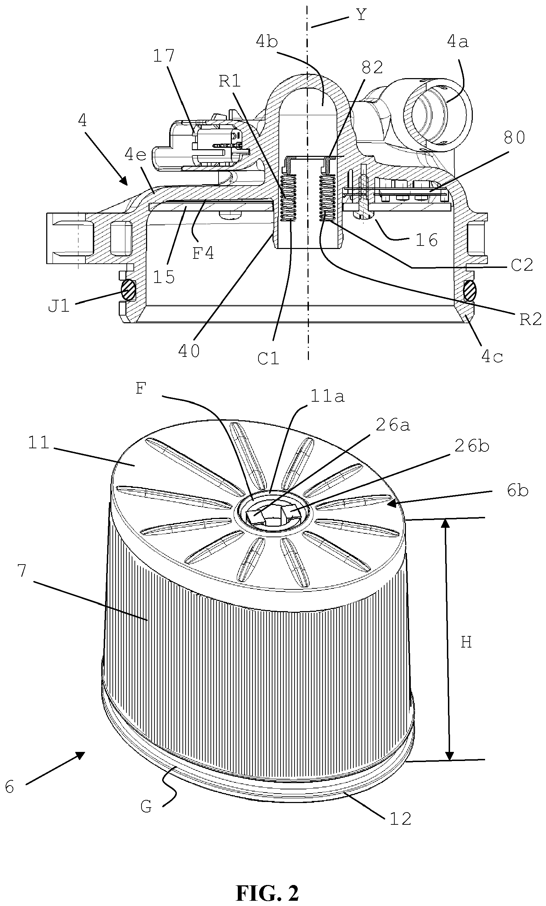

- la figure 2 représente des composants séparés du filtre de la figure 1, dont l'élément filtrant amovible ;

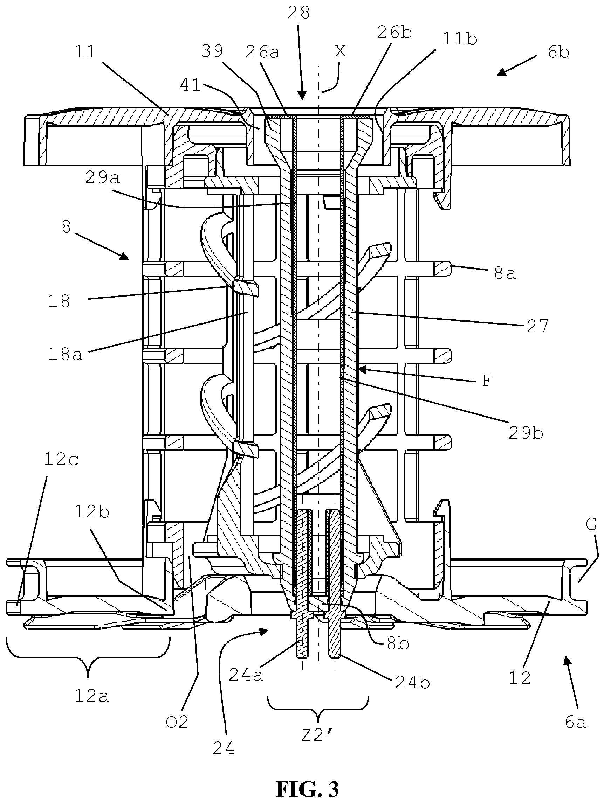

- la figure 3 est une vue en coupe illustrant une ossature de l'élément filtrant montré sur la figure 2 ;

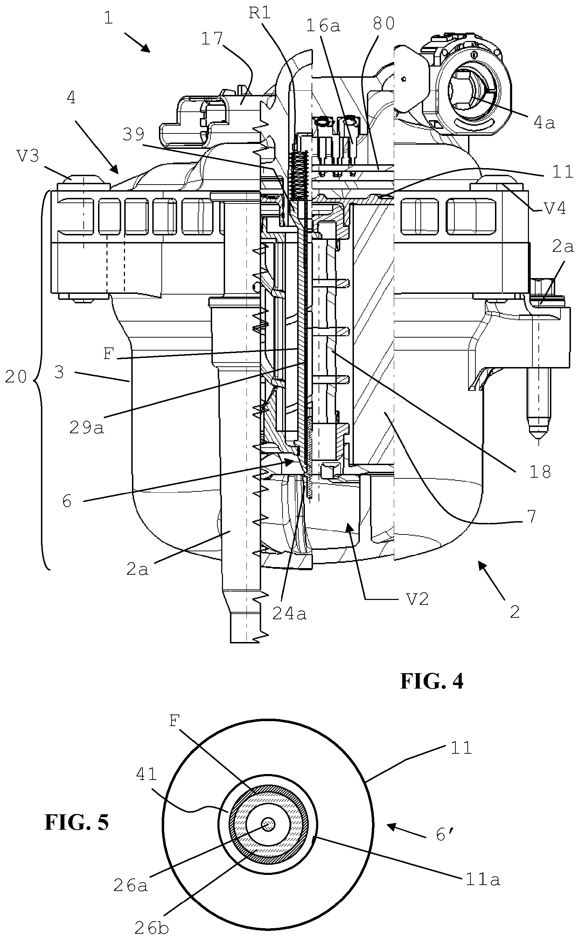

- la figure 4 montre extérieurement le filtre de la figure 1, avec un arraché permettant de voir une partie de l'ensemble à ligne conductrice servant à détecter le niveau d'eau ; et
- la figure 5 est une vue de dessus de l'élément filtrant dans une forme de réalisation alternative conforme à l'invention.

Sur les différentes figures, les mêmes références désignent des éléments identiques ou similaires.

### DESCRIPTION DES MODES DE REALISATION PREFERES DE L'INVENTION

La figure 1 représente un mode de réalisation préféré du filtre à liquide (gazole ou carburant similaire) avec séparateur d'eau.

Le filtre 1 comprend un boîtier 2 qui présente une paroi supérieure et une paroi inférieure. Le boîtier 2 est raccordable de façon interchangeable à des conduites d'un système d'alimentation en carburant d'un véhicule à moteur à combustion. Comme cela est visible sur la figure 4, une paroi externe latérale 20 s'étend depuis la paroi supérieure jusqu'à la paroi inférieure du boîtier 2.

Le boîtier 2 du filtre 1 peut présenter une forme sensiblement tubulaire autour d'un axe central. Dans l'exemple non limitatif des figures, la paroi inférieure du boîtier 2 est définie ou fait partie d'un bol 3 typiquement en métal ou en plastique. Ce bol 3 forme une partie stationnaire dans l'exemple représenté. Le reste du boîtier 2 est fixé de manière amovible par rapport à ce bol 3. La paroi supérieure est formée ici par une tête de filtre 4, qui est reliée de manière étanche à la pièce d'obturation 3 à la manière d'un couvercle. Comme illustré sur la figure 1, cette tête de filtre 4 présente une entrée de carburant 4a ou autre liquide comparable à filtrer ainsi qu'une sortie de carburant 4b ou autre liquide filtré pour permettre la circulation et la filtration du carburant à l'intérieur du filtre 1 séparateur d'eau.

Comme cela est visible sur les figures 1 et 2, le boîtier 2 se décompose ici en plusieurs pièces, ici deux pièces rigides :
- le bol 3 qui présente un fond 3a à partir duquel s'étend vers le haut une paroi latérale annulaire 30, le bol 3 formant un réservoir d'accumulation d'eau (la hauteur du bol 3 est par exemple supérieure à 60 mm et de préférence dépasse la hauteur de la tête de filtre 4) ; et
- la tête de filtre 4 qui est fixée à la paroi latérale 30 et peut être sélectivement démontée.

Le bol 3 définit dans cet exemple tout ou partie d'une chambre pour loger l'élément filtrant 6 du filtre 1. L'extrémité supérieure 3b du bol 3 est annulaire. Un tel bol 3 peut être préhensible d'une main, le diamètre externe ou dimension équivalente de la paroi latérale 30 étant typiquement inférieure à 15 cm. Optionnellement, la tête de filtre 4 peut s'étendre essentiellement au-dessus de l'élément filtrant 6. Dans ce cas, la paroi latérale 20 du boîtier 2 est formée seulement par le bol 3. Selon une autre option, on peut aussi prévoir un composant de boîtier intermédiaire (non représenté) qui s'étend autour de l'axe central entre des extrémités axiales ouvertes, respectivement supérieure et inférieure, le composant de boîtier ayant une paroi latérale cylindrique qui définit tout ou partie de la chambre pour loger l'élément filtrant 6 du filtre 1. Dans ce cas, la tête de filtre 4 est fixée à l'extrémité supérieure du composant de boîtier intermédiaire, tandis que le bol 3 vient se fixer sur l'extrémité inférieure du composant intermédiaire. Le composant de boîtier intermédiaire forme alors un adaptateur de connexion entre le bol 3 et la tête de filtre 4. Dans tous les cas, il est prévu que l'élément filtrant 6 puisse être remplacé en retirant la tête de filtre 4.

L'élément filtrant 6 (formant un insert filtrant) présente un média filtrant 7, un premier flasque appelé dans ce qui suit flasque supérieur 11, un deuxième flasque appelé dans ce qui suit flasque inférieur 12, et un composant longitudinal 8 interne qui s'étend entre le flasque supérieur 11 et le flasque inférieur 12. Le composant longitudinal 8 peut rigidifier l'élément filtrant 6. Le média filtrant 7 s'étend de préférence autour d'un axe longitudinal X qui peut correspondre à un axe central Y pour le filtre 1.

Dans l'exemple non limitatif des figures 1-2 et 4, la tête de filtre 4 présente des moyens de fixation amovible permettant au bol 3 de fermer de manière étanche le boîtier 2. Ces moyens de fixation comportent de préférence au moins deux vis V3, V4 coopérant avec des orifices filetés 3c en correspondance à l'extrémité supérieure 3b de la pièce d'obturation 3. De tes orifices filetés 3c sont formés dans le prolongement de trous d'une portion périphérique 4d de la tête de filtre 4. Un joint J1 peut être prévu, ici dans une gorge annulaire formée latéralement sur l'extrémité inférieure 4c de la tête de filtre 4, pour définir ou améliorer l'étanchéité entre la tête de filtre 4 et le bol 3. Bien entendu, la fixation peut se faire autrement, par exemple avec une baïonnette, un clippage, un serrage par une bride ou un vissage entre la tête de filtre 4 et le bol 3.

Le boîtier 2 est également pourvu sur sa paroi externe (par exemple sur sa paroi latérale 20) d'éléments d'accrochage 2a adaptés pour permettre une fixation par vissage ou par clipsage du filtre 1 sur une partie fixe du bloc moteur du véhicule ou tout autre partie fixe du moteur. On peut voir que ces éléments d'accrochage 2a sont prévus sur le bol 3 qui forme la partie stationnaire du filtre 1.

En référence à la figure 2, l'entrée de carburant 4a et la sortie de carburant 4b sont ici situées dans une partie supérieure 4e de la tête de filtre 4, à distance axiale de l'extrémité supérieure 3b de la pièce d'obturation 3. La partie supérieure 4e peut présenter une face interne F4 qui délimite le haut de la chambre.

On peut voir sur la figure 1, dans la position de montage de l'élément filtrant 6, que le bord interne 11b du flasque supérieur 11 (qui délimite l'orifice central 11a) est en prise avec un organe mâle tubulaire 40 interne de la tête de filtre 4 qui s'étend autour d'un axe central Y qui coïncide typiquement avec l'axe longitudinal X. Une face externe de cet organe mâle 40 est en contact étanche annulaire avec le bord interne 11b. Un bourrelet annulaire peut être formé sur cette face externe afin de réaliser un contact étanche (par exemple un contact plastique-plastique). Il s'agit d'une option qui n'est pas limitative. Plus généralement, cette étanchéité peut être réalisée radialement ou axialement et avec ou sans joint. La zone amont Z1 s'étend notamment au dessus de cette zone d'étanchéité et autour de la zone de fixation associée.

La conception du flasque supérieur 11 est avantageuse en ce qu'elle permet d'éviter d'intégrer dans l'élément filtrant 6 des joints additionnels pour partitionner l'espace situé entre le flasque supérieur 11 et le dessus de la tête de filtre 4. Autrement dit, le flasque supérieur 11 cumule une fonction de maintien du média filtrant 7 et d'assemblage avec la tête de filtre 4.

Ici, les surfaces d'étanchéité de l'élément filtrant 6 sont réalisées par les flasques supérieur 11 et inférieur 12 (de préférence via un joint annulaire J2 rapporté pour le flasque inférieur 12), du côté intérieur pour le flasque supérieur 11 et du côté extérieur pour le flasque inférieur 12. Cette disposition permet de rendre l'élément filtrant 6 plus compact et protège mieux les surfaces d'étanchéité. Le joint J2 est logé dans une gorge annulaire G qui débouche radialement vers l'extérieur.

Le média filtrant 7 présente une face externe 7a qui délimite avec le boîtier 2 un espace annulaire externe E. Le média filtrant 7 présente aussi une face interne 7b qui délimite un espace intérieur 9. Un élément coalesceur et/ou une toile hydrophobe sont prévus, de préférence du côté de la face interne 7b, pour permettre d'évacuer l'eau séparée dans l'espace intérieur 9. Le média filtrant 7 peut être d'un genre connu en soi et ne sera pas davantage décrit ici. Bien entendu, tout autre moyen de séparation d'eau pour réaliser la séparation d'eau dans l'espace intérieur 9 peut être utilisé.

En référence aux figures 1 et 2, on peut voir que l'élément filtrant 6 présente une hauteur H inférieure ou égale à la hauteur de la paroi latérale 30. L'élément filtrant 6 est positionné dans la chambre à l'aide d'un support S de fixation qui maintient l'élément filtrant 6 à distance du fond 3a. De manière non limitative, l'extrémité inférieure 6a de l'élément filtrant 6, ici définie par le flasque inférieur 12 repose directement sur un ou plusieurs rebords supérieurs 14a du support S. Dans sa position de fixation, l'élément filtrant 6 partitionne le volume intérieur entre une zone Z1 en amont du média filtrant 7 communiquant avec l'entrée 4a et une zone Z2 en aval du média filtrant 7 communiquant avec la sortie 4b. On peut voir que l'espace intérieur 9 fait partie ici de la zone aval Z2 et communique avec la sortie de carburant filtré 4b via un orifice central 11a du flasque supérieur 11.

La face externe 7a du média filtrant 7 délimite avec le boîtier 2 un espace annulaire externe E qui fait partie de la zone amont Z1. Le média filtrant 7 retient les impuretés notamment solides et a de préférence une fonction de coalesceur, de façon à séparer des gouttelettes d'eau au-dessus du flasque inférieur 12. Selon une forme de réalisation, l'élément filtrant 6 peut comporter au moins une toile hydrophobe ou autre élément analogue pour la séparation d'eau du côté de la face interne 7b, par exemple le long du composant longitudinal 8, pour permettre d'évacuer l'eau séparée dans l'espace intérieur 9.

Dans des modes de réalisation, il peut aussi être prévu que l'élément de séparation d'eau soit supporté par ou intégré dans le composant longitudinal 8 (par exemple sous la forme d'une toile hydrophobe surmoulée sur la face interne d'un élément tubulaire 18 du composant longitudinal 8), en aval du média filtrant 7. Dans ce cas l'eau peut s'écouler dans l'espace formé entre le média filtrant 7 et la toile hydrophobe (cet espace est ici annulaire et délimité intérieurement par le diamètre interne de l'élément tubulaire 18). Des ouvertures radiales 18a formées sur l'élément tubulaire 18 permettent au carburant de s'écouler vers la zone en aval Z2 après avoir traversé l'élément de séparation d'eau.

En référence à l'exemple non limitatif de la figure 3, on peut voir que chacun des flasques 11 et 12 de l'élément filtrant 6 est fixé au composant longitudinal 8. Cette disposition permet de rigidifier l'élément filtrant 6. La face interne 7b peut s'appuyer contre la face externe 8a définie par le composant longitudinal 8. Autrement dit, le composant longitudinal 8, ici de forme tubulaire, forme une structure de maintien du média filtrant 7. Dans un mode de réalisation préféré, le composant longitudinal 8, le flasque supérieur 11 et le flasque inférieur 12 sont de préférence des pièces moulées à partir d'une matière plastique.

Dans le filtre 1 tel qu'illustré à la figure 1, on comprend que l'élément filtrant 6 peut être traversé par le flux de carburant dans la direction radiale. Cet élément filtrant 6 est alors orienté en position de montage suivant un axe vertical (ou autre) du véhicule. En référence à la figure 1, les flèches montrent le sens de circulation du carburant dans le filtre 1. La zone en amont Z1 par rapport au média filtrant 7 comprend en particulier une zone annulaire située au dessus de l'élément filtrant 6, adjacente à l'entrée 4a, et l'espace annulaire E qui fait le tour du média filtrant 7. Le carburant brut situé dans cet espace annulaire E traverse le média filtrant 7 pour atteindre l'espace intérieur 9, du côté de la zone en aval Z2.

Comme on peut le voir sur les figures 1 et 2, le filtre 1 comprend également des moyens de chauffage électrique. Ici ces moyens de chauffage électrique consistent par exemple en une plaque de circuit imprimé 15 disposée dans la zone amont Z1, et plus particulièrement entre la face interne F4 de la partie supérieure 4e et le flasque supérieur 11 de l'élément filtrant 6. Cette plaque de circuit imprimé 15 peut comporter principalement un substrat rigide réalisé à partir d'un matériau électriquement isolant, un circuit de cuivre imprimé directement porté par le substrat rigide, différents composants électriques fixés sur le substrat tout en étant reliés électriquement entre eux par le biais du circuit de cuivre imprimé, et un ou plusieurs éléments de chauffage du carburant. Ces éléments de chauffage peuvent, dans une forme de réalisation, être formés par exemple par au moins une piste ou une pluralité de pistes de cuivre imprimées directement réalisées sur le substrat en utilisant le cuivre ayant servi à connecter électriquement entre eux les différents composants électriques. L'échauffement est obtenu dans ce cas par effet joule lorsque la piste est traversée par le courant, de façon à permettre un réchauffement convenable du carburant venant au contact de cette piste chauffante. Une telle plaque de circuit imprimé 15 peut être montée à l'aide de vis 16 et des connecteurs plats à languette 16a (type Faston®) peuvent permettre de relier cette plaque 15 à un connecteur électrique externe 17 intégré dans la tête de filtre 4. Bien entendu, on peut utiliser une autre structure connue en soi pour réaliser le chauffage en amont de la filtration, de préférence une utilisant le connecteur électrique externe 17. Ainsi, un élément de chauffage PTC ("Positive Temperature Coefficient"), par exemple en céramique, peut être placé dans la zone amont Z1.

En référence aux figures 1 et 3, l'élément filtrant 6 de type amovible comporte un capteur de niveau d'eau 24 qui présente un premier pôle électrique 24a et un deuxième pôle électrique 24b. On comprend que ce capteur de niveau d'eau 24 fait partie de moyens de détection d'eau qui s'étendent au moins en partie dans le compartiment inférieur V2 (jusqu'à la zone de collecte d'eau). Ces deux pôles 24a, 24b sont ici formés par deux électrodes conductrices qui traversent le flasque inférieur 12 et sont reliés à deux bornes 26a, 26b correspondantes qui permettent un raccordement électrique à deux contacts C1, C2 prévus dans la tête de filtre 4. Ces électrodes sont par exemple à section ronde et raccordées chacune à l'extrémité inférieure d'une ligne ou bandeau de conduction 29a, 29b.

Le composant longitudinal 8 peut avantageusement servir de support de montage à l'ensemble 28 qui inclut les lignes ou bandeaux de conduction 29a, 29b. Dans l'exemple illustré, il est prévu un fourreau F ou structure analogue dont la paroi latérale 27 permet de fixer, et typiquement surmouler, les lignes ou bandeaux de conduction 29a, 29b. Une face inférieure radiale 8b du composant longitudinal 8, qui peut appartenir (au moins en partie) au fourreau F, permet de former une barrière physique qui s'oppose à une remontée de l'eau vers la sortie 4b de carburant selon une direction longitudinale, par exemple lors d'un bref à-coup pouvant se produire lors de la conduite d'un véhicule. Le fourreau F, rigide, fait ici partie de l'ensemble 28 et permet de supporter les lignes ou bandeaux de conduction 29a, 29b.

Le fourreau F s'étend longitudinalement dans l'espace intérieur 9 et entoure les lignes ou bandeaux de conduction 29a, 29b fixés du côté de la face interne de la paroi latérale 27. De préférence, cette paroi latérale 27 se raccorde de façon étanche à la face inférieure radiale 8b et s'étend jusqu'à une ouverture axiale située à l'extrémité supérieure de l'ensemble 28. Le fourreau F comprend au moins une ouverture radiale (non montrée) et permet de canaliser le carburant filtré, en le guidant longitudinalement (ici à l'aplomb de la sortie 4b). Bien entendu, on peut éventuellement supprimer le fourreau F dans une variante de réalisation, et maintenir les lignes ou bandeaux de conduction 29a, 29b sur un autre élément de paroi, par exemple sur l'intérieur de l'élément tubulaire 18 et les bornes 26a, 26b peuvent optionnellement être formées par des organes de contact élastique qui s'étendent radialement vers l'axe longitudinal X.

En référence aux figures 1 et 3, on comprend que l'extrémité inférieure 6a de l'élément filtrant 6 présente les premier et deuxième pôles électriques 24a, 24b tout en étant adaptée pour s'opposer à une circulation ascendante directe (c'est-à-dire sans changement de direction) de fluide entre le compartiment inférieur V2 et la partie de la zone aval Z2 adjacente à la sortie 4b. Ainsi, le flasque inférieur 12 présente des ouvertures d'écoulement d'eau 02 de faible section (la section totale du ou des ouvertures 02 étant très inférieure à la section du flasque inférieur 12), comme illustré sur les figures 1 et 3. Ces ouvertures 02 sont aussi décalées par rapport aux axes X et Y.

L'effet de barrière contre des remontées d'eau est assuré, au niveau de l'extrémité inférieure 6a de l'élément filtrant 6 :
- par une portion radiale d'étanchéité 12a de forme annulaire qui s'étend radialement depuis un premier bord annulaire 12b (sous-jacent par rapport à la face interne 7b du média filtrant 7) jusqu'à un deuxième bord annulaire 12c périphérique qui s'étend au-delà de la face externe 7a du média filtrant 7 ;
- la face inférieure radiale 8b qui est traversée par l'axe longitudinal X ; et
- des portions qui font la liaison entre la face inférieure radiale 8b et la portion radiale d'étanchéité 12a et qui séparent deux ouvertures 02 adjacentes.

Le premier pôle électrique 24a et le deuxième pôle électrique 24b du capteur 24, ici défini par des électrodes de détection, sont situés chacun entre l'axe longitudinal X (près de celui-ci) et le premier bord annulaire 12b. La circulation de fluide via les ouvertures 02 est réalisée ici extérieurement à l'élément tubulaire 18 qui forme ou supporte l'élément de séparation d'eau. L'espace intérieur 9 peut donc communiquer, loin de l'axe longitudinal X, par son côté inférieur avec le compartiment inférieur V2 où l'eau peut s'accumuler et par son côté supérieur, le long de l'axe longitudinal X, avec la sortie de carburant filtré 4b.

Dans cet exemple, l'eau séparée par l'élément de séparation d'eau, se présentant sous forme de gouttelettes dans l'espace intérieur 9, tombe par gravité dans le compartiment inférieur V2 au travers des ouvertures 02 qui sont par exemple formés autour de l'élément tubulaire 18. La zone centrale Z2' de l'extrémité inférieure 6a comprend seulement deux ouvertures obturées de façon préférentiellement étanche par les électrodes. L'ensemble 28 à ligne de conduction permettant de définir le capteur de niveau d'eau 24 est ici formé intérieurement dans l'élément tubulaire 18, à l'exception des extrémités des électrodes qui forment les pôles électriques 24a et 24b.

Ces pôles électriques 24a et 24b permettent de signaler l'atteinte d'un seuil de remplissage du compartiment inférieur V2. Ainsi, tant que les deux pôles électriques 24a et 24b sont entièrement immergées dans le carburant (par exemple le gazole), elles sont sensiblement isolées électriquement l'une de l'autre compte tenu du caractère isolant de ce carburant. A l'inverse, dès que le niveau d'eau du compartiment inférieur V2 atteint les extrémités inférieures (pôles 24a, 24b) des deux électrodes, la résistance électrique entre les deux pôles électriques 24a, 24b chute brutalement et cette information peut alors être envoyée à l'unité centrale du véhicule au moyen du connecteur électrique externe 17, correspondant ici typiquement à une broche de retour de signal d'information de la plaque de circuit imprimé 15.

Bien entendu, le traitement du signal de détection peut être traité optionnellement sans passer par une interface utilisée pour des moyens de chauffage électrique.

Par ailleurs, selon une variante de réalisation, après un temps défini de présence d'eau détectée par le capteur 24, l'alimentation électrique des deux pôles électriques 24a, 24b peut être coupée. Cette temporisation peut notamment être réalisée par le biais d'un condensateur électrique que l'on charge jusqu'à atteindre une tension déterminée, le temps de chargement du condensateur réalise ainsi la fonction temporisation. Cette coupure de l'alimentation au bout d'une période de temps prédéterminée permet d'éviter qu'un dépôt électrolytique ne se forme sur les pôles électriques 24a, 24b lorsque ceux-ci sont au contact de l'eau stockée dans le compartiment d'eau V2.

En référence aux figures 1 et 3, l'ensemble 28 à liaison conductrice comprend une extrémité supérieure, proche du flasque supérieur 11, qui inclut les deux bornes 26a, 26b de connexion électrique détachable. Dans cet exemple les bornes 26a et 26b sont fixes par rapport à l'élément filtrant 6, tandis que les contacts C1 et C2 formés sur la tête de filtre 4 ont une position ajustable. Un espacement est prévu entre les contacts C1, C2 ainsi qu'entre les bornes 26a, 26b pour permettre l'isolation électrique. Ici, les contacts C1 et C2 sont formés chacun par l'extrémité d'un organe de rappel élastique R1, R2 en matériau électriquement conducteur (un ressort hélicoïdal dans l'exemple illustré). L'autre extrémité de l'organe de rappel élastique R1, R2 est fixe et peut être reliée à une patte surmoulée 82 qui fait la jonction électrique avec le connecteur électrique externe 17 ou un circuit intermédiaire placé dans la tête de filtre 4.

Les bornes 26a et 26b présentent chacune une face supérieure plane et s'étendent de préférence dans un même plan transversal. Dans l'état monté de l'élément filtrant 6, les organes de rappel élastique R1, R2 s'engagent contre les faces supérieures des bornes 26a, 26b, respectivement avec un effort d'appui descendant. En variante, on peut utiliser un effet de rappel élastique du côté des bornes 26a, 26b, tandis que la position des contacts C1 et C2 est fixe (par exemple avec des contacts C1 et C2 qui pénètrent dans l'espace intérieur 9).

Plus généralement, on comprend que l'ensemble 28 à liaison conductrice de l'élément filtrant 6 forme une partie de circuit qui se raccorde de manière amovible à l'électronique de détection de fermeture de circuit. L'interface de connexion formée à l'extrémité supérieure de l'ensemble 28 à liaison conductrice (du côté de la zone en aval Z2) permet un transfert du signal de détection du capteur 24 vers un module de la tête de filtre 4 dans un état assemblé du filtre 1, via les contacts C1 et C2. Le signal de détection représentatif de la présence d'eau entre le premier pôle électrique 24a et le deuxième pôle électrique 24b peut passer par un circuit électrique 80 qui sert à alimenter les moyens de chauffage électrique.

L'extrémité inférieure de l'ensemble 28 à liaison conductrice est située dans ou à immédiate proximité du compartiment inférieur V2, de sorte que le capteur 24 est situé au même niveau ou plus bas que le flasque inférieur 12.

Les moyens de fixation amovible tels que des vis (V3, V4), un système à baïonnette, des organes de clippage ou un filetage du couvercle formant la tête de filtre 4 permettent de remplacer l'élément filtrant 6. L'extraction sélective de l'élément filtrant 6 est permise par l'utilisation d'une interface de connexion en matériau électriquement conducteur qui facilite la déconnexion entre les bornes 26a, 26b et les deux contacts espacés correspondants de la tête de filtre 4. On évite de préférence tout contact radial pour réaliser la connexion électrique détachable. On peut voir sur la figure 1 que le ou les éléments de rappel élastique qui permettent un contact électrique efficace entre les contacts C1, C2 et les bornes 26a, 26b s'étendent de préférence à l'intérieur d'un tube virtuel VT défini par le composant longitudinal 8. Les pôles électriques 24a, 24b du capteur 24 (et plus généralement l'ensemble 28 à ligne conductrice) sont également situés à l'intérieur de ce tube virtuel VT.

En référence aux figures 1 et 2, on peut voir que l'élément filtrant 6 comprend des moyens anti-rotation en contact avec la paroi latérale 30 du bol 3 et permettant à l'élément filtrant 6 d'être guidé et/ou fixé relativement au bol 3, de façon à ce que les deux bornes 26a, 26 soient reliés aux deux contacts C1, C2 du couvercle formant la tête de filtre 4. Plus particulièrement dans cet exemple non limitatif, on utilise des moyens anti-rotation qui permettent une indexation en position de l'élément filtrant 6. Ces moyens anti-rotation sont formés à la périphérie de l'un au moins des flasque supérieur 11 et flasque inférieur 12 et résultent ici d'un format déterminé non circulaire (format ici oval). La paroi latérale annulaire 30 présente également un tel format non circulaire et adapté pour guider les moyens anti-rotation par un contact annulaire serré.

Dans cet exemple, le flasque inférieur 12 de plus grande section est en contact avec la paroi latérale 30 par le joint J2, comme bien visible sur la figure 1. Bien entendu, les moyens V3, V4 de fixation amovible de la tête de filtration 4 sont ici configurés pour que, dans la position d'assemblage, la position angulaire relative du couvercle formant la tête de filtre 4, par rapport au bol 3, corresponde à une position prédéterminée qui est la seule (ou en variante l'une des deux seules) compatible pour permettre de connecter les bornes 26a, 26b aux contacts C1, C2.

Dans un mode de réalisation, les organes de connexion amovible 39, 11b formés sur l'extrémité supérieure 6b de l'élément filtrant 6 peuvent s'engager de façon étanche avec l'organe mâle tubulaire 40 et maintenir l'élément filtrant 6 solidaire de la tête de filtre 4 pendant une extraction de l'élément filtrant 6 hors du bol 3, au moins tant que les moyens anti-rotation sont en contact annulaire serré avec la paroi latérale 30. Sur la figure 1, il est prévu une augmentation de section de la paroi latérale 30 juste en dessous de la zone de fixation avec l'extrémité 4c et le joint J1, de sorte que l'élément filtrant 6 peut être incliné avant de sortir complètement par l'ouverture supérieure du bol 3. Cette possibilité d'inclinaison permet avantageusement de limiter le dégagement au dessus du filtre 1 et une utilisation dans un environnement encombré est plus facile.

Alternativement, l'élément filtrant 6 peut se désengager plus rapidement de la tête de filtre 4 et peut optionnellement comporter au moins un organe de retenue, par exemple de type baïonnette ou clip, qui s'engage contre le bol 3. On comprend dans ce cas que l'interface de connexion de l'élément filtrant 6 se détache des contacts C1, C2 de la tête de filtre 4 avant le désengagement dudit organe de retenue par rapport au bol 3. A titre d'exemple non limitatif, un mouvement de rotation exercé sur le flasque supérieur 11 peut permettre un désengagement aisé de l'organe de retenue.

Bien que les figures 1 à 4 montrent une position angulaire prédéterminée de la tête de filtre 4 dans un filtre qui présente une asymétrie pour la fixation sur le bol 3, on comprend qu'on peut utiliser une géométrie différente du filtre 1 avec un simple vissage de la tête de filtre 4 sur l'extrémité supérieure 3b du bol 3 (et plus généralement avec une rotation relative entre la tête de filtre et le bol 3). Dans ce cas les bornes 26a, 26b de l'élément filtrant 6' sont situés à l'extrémité supérieure de l'ensemble 28 peuvent être agencées de façon concentrique autour de l'axe longitudinal X, comme illustré sur la figure 5. La borne 26b présente ici une face supérieure annulaire sur laquelle vient appuyer le contact C2. La position du contact C1 est alignée sur l'axe longitudinal X pour appuyer sur la face supérieure de la borne 26a. On comprend que l'élément filtrant 6 peut être sensiblement identique à ce qui est montré sur la figure 3, à l'exception de l'extrémité supérieure des lignes ou bandeaux 29a, 29b dont l'un converge vers l'axe longitudinal X et l'autre reste distant de l'axe longitudinal X en se terminant en portion annulaire.

Des bornes 26a, 26b peuvent aussi être réalisées par utilisation de deux pistes semi circulaires, placées face à face, de façon à réaliser une piste circulaire quasi complète (typiquement de même largeur) permettant aux contacts C1, C2 (disposés en oppositions sur un cercle virtuel correspondant) de venir en contact avec chacune de ces pistes. Cette solution permet également d'avoir un élément filtrant 6 non indexé en rotation. L'isolation électrique des deux pistes est par exemple réalisée au moyen de deux petites pyramides ou projections similaires, de la largeur des pistes, qui permettrait, dans le cas où les contacts C1, C2 seraient en face de ces pyramides, de réorienter mécaniquement l'élément filtrant 6 au moment de l'assemblage.

En référence à la figure 3, on peut voir que le fourreau F présente une extrémité supérieure 39, de préférence localement plus large et éventuellement plus épaisse, qui supporte l'une au moins des bornes 26a, 26b. Cette extrémité supérieure 39 délimite avec le bord interne 11b du flasque supérieur 11 un espace annulaire 41 (avec écartement ici constant entre le fourreau F et le bord interne 11b). Dans la position assemblée montrée à la figure 1, l'organe mâle tubulaire 40 de la tête de filtre 4 est en contact étanche annulaire avec ou relié de façon étanche au bord interne 11b, de façon à obstruer entièrement l'espace annulaire 41. Du fait de l'élasticité de l'organe mâle tubulaire 40, de l'effet de guidage par l'extrémité supérieure 39, et de la présence d'un relief d'étanchéité, ici un bourrelet formé extérieurement sur l'organe mâle 40, on obtient une très bonne étanchéité radiale au moins du côté de la face externe de l'organe mâle 40.

Le boîtier 2 illustré sur les figures n'est pas limitatif pour contenir l'élément filtrant 6. Ainsi un boîtier intégrant un dispositif de réchauffage situé sur le côté de l'élément filtrant 6 peut être utilisé, comme dans le boîtier illustré dans les figures 2 et 3 brevet FR 2 938 881. Par ailleurs, il est permis dans des variantes de former une cartouche qui inclut l'élément filtrant 6 et un réservoir embarqué pour stocker l'eau. Le réservoir embarqué est dans ce cas essentiellement formé par une cuve rendue solidaire du flasque inférieur 12.

Le filtre 1 peut aussi, dans une variante, comporter un conduit d'évacuation d'eau directement raccordé au composant longitudinal 8 et/ou au flasque supérieur 11 de l'élément filtrant 6. L'extrémité supérieure d'un tel conduit d'évacuation peut être raccordée à une interface permettant un pompage de l'eau collectée dans le compartiment inférieur V2. Le conduit d'évacuation s'étend longitudinalement le long de la face interne 7b du média filtrant 7 et peut traverser le flasque supérieur 11 dans une zone adjacente au bord interne 11b et décalée radialement vers l'extérieur.

Il doit être évident pour les personnes versées dans l'art que la présente invention permet des modes de réalisation sous de nombreuses autres formes spécifiques sans l'éloigner du domaine d'application de l'invention comme revendiqué.

Ainsi, bien que l'entrée de carburant brut 4a et la sortie de carburant filtré 4b soient ici prévues dans la paroi supérieure de la tête de filtre 4, d'autres agencements peuvent être utilisés, par exemple avec une entrée formée dans une paroi latérale, à distance du fond 3a du bol 3. Plus généralement, les zones d'étanchéité entre l'élément filtrant 6 et la tête de filtre 4 pour isoler la zone en amont Z1 par rapport à la zone en aval Z2 peuvent se présenter sous différentes formes.

## Revendications

1. Filtre à carburant (1) séparateur d'eau, comportant :
- un boîtier externe (2) présentant un couvercle (4) et un bol (3), le boîtier délimitant un volume intérieur et présentant une entrée de carburant brut (4a) et une sortie de carburant filtré (4b), de préférence agencées à distance d'un fond du boîtier (3a) ;
- un élément filtrant (6 ; 6') disposé dans un compartiment supérieur (V1) du volume intérieur, l'élément filtrant comportant un flasque supérieur (11), un flasque inférieur (12), un média filtrant (7) annulaire s'étendant autour d'un axe longitudinal (X) entre le flasque supérieur (11) et le flasque inférieur (12), le média filtrant ayant une face interne (7b) qui délimite un espace intérieur (9), l'élément filtrant (6 ; 6') délimitant une zone amont (Z1) communiquant avec l'entrée de carburant brut (4a) et une zone aval (Z2) communiquant avec la sortie de carburant filtré (4b) ;
- un ensemble (28) à liaison conductrice comprenant une extrémité supérieure, plus proche du flasque supérieur (11) que du flasque inférieur (12), et une extrémité inférieure présentant un capteur (24) de niveau d'eau et située au même niveau ou plus bas que le flasque inférieur (12) ;
- un compartiment inférieur (V2) du volume intérieur, dans lequel de l'eau séparée peut s'accumuler pour atteindre le capteur (24) ;
- une interface de connexion en matériau électriquement conducteur pourvue de deux bornes (26a, 26b) espacées adaptées pour se raccorder de façon détachable à deux contacts (C1, C2) du couvercle (4) qui sont espacés l'un de l'autre, ledit capteur (24) comprenant un premier pôle électrique (24a) en liaison avec l'une des deux bornes (26a) et un deuxième pôle électrique (24b) en liaison avec l'autre des deux bornes (26b), afin de fournir un signal de détection représentatif de la présence d'eau entre le premier pôle électrique et le deuxième pôle électrique, l'interface de connexion faisant partie de l'extrémité supérieure de l'ensemble (28) à liaison conductrice et permettant un transfert du signal de détection dudit capteur (24) vers le couvercle (4) dans un état assemblé du couvercle pour fermer le boîtier (2) ;
**caractérisé en ce qu'il** comprend des moyens (V3, V4) de fixation amovible pour rendre le couvercle (4) détachable par rapport au bol (3) et permettre l'extraction sélective de l'élément filtrant, de sorte que l'élément filtrant est remplaçable, l'élément filtrant (6 ; 6') comportant l'ensemble (28) à liaison conductrice avec l'interface de connexion qui s'étend du côté de la zone aval (Z2),
**et en ce que** l'élément filtrant (6 ; 6') est adapté pour séparer l'eau dans l'espace intérieur (9) qui communique, du côté du flasque supérieur (11) de l'élément filtrant, avec la sortie de carburant filtré (4b) et du côté du flasque inférieur (12) avec le compartiment inférieur (V2), ledit ensemble (28) étant positionné du côté de la séparation d'eau pour permettre à l'eau séparée et accumulée d'atteindre le capteur (24), c'est-à-dire dans la zone aval (Z2), en s'étendant dans l'espace intérieur (9) ;
le flasque inférieur (12) séparant la zone amont (Z1) du compartiment inférieur (V2) de façon étanche aux liquides et présentant au moins une ouverture d'écoulement d'eau (02) qui permet de faire communiquer l'espace intérieur (9) avec le compartiment inférieur (V2).

2. Filtre selon la revendication 1, dans lequel le flasque inférieur (12) présente une portion radiale d'étanchéité (12a) de forme annulaire qui s'étend radialement depuis un premier bord annulaire (12b) sous-jacent par rapport à la face interne (7b) du média filtrant (7) jusqu'à un deuxième bord annulaire (12c) périphérique qui s'étend au-delà de la face externe (7a) du média filtrant (7), le premier pôle électrique (24a) et le deuxième pôle électrique (24b) du capteur (24) étant définis par une paire d'électrodes de détection qui s'étendent entre l'axe longitudinal (X) et ledit premier bord annulaire (12b).

3. Filtre selon l'une quelconque des revendications 1 à 2, dans lequel l'ensemble (28) à liaison conductrice est radialement distant de la face interne (7b) du média filtrant (7) et fait partie de l'élément filtrant (6 ; 6') en étant monté sur un composant longitudinal (8) rigide solidaire de l'un au moins parmi le flasque supérieur (11) et le flasque inférieur (12).

4. Filtre selon la revendication 3, dans lequel l'ensemble (28) à liaison conductrice comprend un fourreau (F) qui s'étend longitudinalement dans l'espace intérieur (9) depuis une face inférieure radiale (8b) jusqu'à une ouverture axiale située à l'extrémité supérieure dudit ensemble (28), le fourreau (F) comprenant au moins une ouverture radiale et étant adapté pour canaliser du carburant filtré à l'aplomb de la sortie (4b).

5. Filtre selon l'une quelconque des revendications 1 à 4, dans lequel les moyens (V3, V4) de fixation amovible du couvercle (4) sont configurés pour que, dans la position montée du couvercle, la position angulaire relative du couvercle par rapport au bol (3) corresponde à une position prédéterminée, et dans lequel l'élément filtrant (6) comprend des moyens anti-rotation en contact avec une paroi latérale (30) du bol (3) et permettant à l'élément filtrant (6) d'être guidé et/ou fixé relativement au bol (3), de façon à ce que les deux bornes (26a, 26b) soient reliées aux deux contacts (C1, C2) du couvercle (4).

6. Filtre selon la revendication 5, dans lequel le bol (3) comprend une paroi latérale annulaire (30) ayant un format non circulaire et adapté pour guider les moyens anti-rotation par un contact annulaire serré.

7. Filtre selon la revendication 6, dans lequel l'élément filtrant (6 ; 6') comprend des organes de connexion amovible (39, 11b) adaptés pour s'engager de façon étanche avec un organe mâle tubulaire (40) du couvercle (4) et maintenir l'élément filtrant (6) solidaire du couvercle (4) pendant une extraction de l'élément filtrant hors du bol (3), au moins tant que les moyens anti-rotation sont en contact annulaire serré avec la paroi latérale (30) du bol (3).

8. Filtre selon l'une quelconque des revendications 1 à 4, dans lequel les moyens de fixation amovible du couvercle (4) sont configurés pour permettre une rotation relative entre le couvercle et le bol (3) selon un axe de rotation, sachant que les deux bornes (26a, 26b) de l'interface de connexion ou les deux contacts (C1, C2) sont de forme annulaire et concentriques autour de l'axe de rotation qui coïncide avec ledit axe longitudinal (X) ou forment une paire d'arcs de cercle de forme semi-circulaire autour dudit axe de rotation.

9. Filtre selon l'une quelconque des revendications 1 à 6 et 8, dans lequel l'élément filtrant (6 ; 6') comprend au moins un organe de retenue adapté pour s'engager contre le bol (3), ladite interface de connexion de l'élément filtrant (6) étant adaptée pour se détacher du couvercle (4) avant le désengagement dudit organe de retenue par rapport au bol (3).

10. Filtre selon l'une quelconque des revendications 1 à 9, dans lequel le bol (3) forme une partie stationnaire du filtre (1) et comporte des moyens externes de fixation (2a), ce grâce à quoi le bol peut être fixement solidaire d'un moteur à combustion interne pendant une opération de remplacement de l'élément filtrant (6 ; 6').

11. Insert filtrant pour coopérer dans le filtre à carburant séparateur d'eau selon l'une quelconque des revendications 1 à 4, adapté pour se monter dans le volume intérieur du boîtier externe (2) dudit filtre, **caractérisé en ce qu'**il comprend l'élément filtrant (6 ; 6') dudit filtre à carburant séparateur d'eau, de sorte que l'insert filtrant comporte :
- un ensemble (28) à liaison conductrice pourvu d'une interface de connexion ;
- un flasque supérieur (11) pourvu d'un orifice central (11a),
- un flasque inférieur (12) présentant au moins une ouverture centrale d'écoulement d'eau (02),
- un média filtrant (7) annulaire s'étendant autour d'un axe longitudinal (X) entre le flasque supérieur (11) et le flasque inférieur (12), le média filtrant (7) ayant une face interne (7b) qui délimite un espace intérieur (9),
l'orifice central (11a) et l'au moins une ouverture centrale d'écoulement d'eau (02) étant décalés radialement vers l'intérieur par rapport à la face interne (7b),
l'élément filtrant (6 ; 6') étant apte à délimiter une zone amont (Z1) communiquant avec une entrée de carburant brut (4a) dudit filtre et une zone aval (Z2) communiquant avec la sortie de carburant filtré (4b), sachant que la zone d'aval (Z2) inclut :
- l'espace intérieur (9) qui débouche vers le haut pour communiquer avec la sortie (4b) via l'orifice central (11a) du flasque supérieur (11) ; et
- un compartiment inférieur (V2) dans le volume intérieur du boîtier externe (2), l'espace intérieur (9) communiquant avec le compartiment inférieur (V2) via l'au moins une ouverture d'écoulement d'eau (02) ;
l'ensemble (28) à liaison conductrice étant une structure qui comprend :
- une extrémité supérieure, plus proche du flasque supérieur (11) que du flasque inférieur (12), l'interface de connexion faisant partie de l'extrémité supérieure de l'ensemble (28) à liaison conductrice, l'interface de connexion étant en matériau électriquement conducteur et pourvue de deux bornes (26a, 26b) espacées adaptées pour se raccorder de façon détachable à deux contacts (C1, C2) du couvercle (4) dudit filtre qui sont espacés l'un de l'autre ;
- une extrémité inférieure présentant ledit capteur (24) de niveau d'eau et située au même niveau ou plus bas que le flasque inférieur (12) ; et
- une liaison conductrice entre le capteur (24) de niveau d'eau et l'interface de connexion, fixement montée dans l'espace intérieur (9), ledit capteur (24) comprenant un premier pôle électrique (24a) en liaison avec l'une des deux bornes (26a) et un deuxième pôle électrique (24b) en liaison avec l'autre des deux bornes (26b), ce grâce à quoi le capteur (24) est apte à fournir un signal de détection représentatif de la présence d'eau entre le premier pôle électrique et le deuxième pôle électrique.

12. Insert filtrant selon la revendication 11, dans lequel les deux bornes (26a, 26b) de l'interface de connexion présentent chacune une face supérieure plane pour réaliser la connexion électrique détachable sans contact radial, l'interface de connexion faisant partie de ladite extrémité supérieure de l'ensemble (28) à liaison conductrice pour permettre un transfert du signal de détection dudit capteur (24) vers le couvercle (4) dudit filtre dans un état assemblé du couvercle pour fermer le boîtier (2).

## Patentansprüche

1. Wasserabscheidender Kraftstofffilter (1), umfassend:
- ein Außengehäuse (2) mit einem Deckel (4) und einer Schale (3), wobei das Gehäuse ein Innenvolumen begrenzt und einen Einlass für Rohkraftstoff (4a) und einen Auslass für gefilterten Kraftstoff (4b) aufweist, die vorzugsweise zu einem Gehäuseboden (3a) beabstandet angeordnet sind;
- ein Filterelement (6; 6'), das in einer oberen Kammer (V1) des Innenvolumens angeordnet ist, wobei das Filterelement einen oberen Flansch (11), einen unteren Flansch (12) und ein ringförmiges Filtermedium (7) umfasst, das sich um eine Längsachse (X) zwischen dem oberen Flansch (11) und dem unteren Flansch (12) erstreckt, wobei das Filtermedium eine Innenfläche (7b) aufweist, die einen Innenraum (9) begrenzt, wobei das Filterelement (6; 6') einen stromaufwärtigen Bereich (Z1) begrenzt, der mit dem Einlass für den Rohkraftstoff (4a) in Verbindung steht, und einen stromabwärtigen Bereich (Z2) begrenzt, der mit dem Auslass für den gefilterten Kraftstoff (4b) in Verbindung steht,
- eine leitfähige Verbindungsanordnung (28), die ein oberes Ende umfasst, das näher am oberen Flansch (11) als am unteren Flansch (12) liegt, und ein unteres Ende umfasst, das einen Wasserstandsensor (24) aufweist und auf gleicher Höhe oder tiefer als der untere Flansch (12) angeordnet ist;
- eine untere Kammer (V2) des Innenvolumens, in der sich abgeschiedenes Wasser derart sammeln kann, dass es den Sensor (24) erreicht;
- eine Verbindungsschnittstelle aus elektrisch leitfähigem Material, welche mit zwei beabstandeten Anschlüssen (26a, 26b) versehen ist, die zur lösbaren Verbindung mit zwei Kontakten (C1, C2) des Deckels (4) ausgebildet sind, die voneinander beabstandet sind, wobei der Sensor (24) einen ersten elektrischen Pol (24a) in Verbindung mit einem der beiden Anschlüsse (26a) und einen zweiten elektrischen Pol (24b) in Verbindung mit dem anderen der beiden Anschlüsse (26b) aufweist, um ein Detektionssignal zu liefern, das das Vorhandensein von Wasser zwischen dem ersten elektrischen Pol und dem zweiten elektrischen Pol anzeigt, wobei die Verbindungsschnittstelle einen Teil des oberen Endes der leitfähigen Verbindungsanordnung (28) bildet und die Übertragung des Detektionssignals von dem Sensor (24) zu dem Deckel (4) in einem zusammengebauten Zustand des Deckels zum Schließen des Gehäuses (2) ermöglicht;
**dadurch gekennzeichnet, dass** er abnehmbare Befestigungsmittel (V3, V4) aufweist, um den Deckel (4) von der Schale (3) abnehmbar zu machen und ein selektives Herausnehmen des Filterelements zu ermöglichen, so dass das Filterelement austauschbar ist, wobei das Filterelement (6; 6') die leitfähige Verbindungsanordnung (28) mit der Verbindungsschnittstelle aufweist, die sich auf der Seite des stromabwärtigen Bereichs (Z2) erstreckt, **und dass** das Filterelement (6; 6') dazu ausgebildet ist, Wasser in dem Innenraum (9) abzuscheiden, der auf der Seite des oberen Flansches (11) des Filterelements mit dem Auslass für gefilterten Kraftstoff (4b) und auf der Seite des unteren Flansches (12) mit der unteren Kammer (V2) in Verbindung steht, wobei die Anordnung (28) auf der Wasserabscheidungsseite derart angeordnet ist, dass das abgeschiedene und gesammelte Wasser den Sensor (24) erreichen kann, d.h. im stromabwärtigen Bereich (Z2), indem sie sich in den Innenraum (9) erstreckt; wobei der untere Flansch (12) den stromaufwärtigen Bereich flüssigkeitsdicht von der unteren Kammer (V2) trennt und wenigstens eine Wasserströmungsöffnung (O2) aufweist, die eine Verbindung des Innenraumes (9) mit der unteren Kammer (V2) ermöglicht.

2. Filter nach Anspruch 1, wobei der untere Flansch (12) einen radialen Dichtungsabschnitt (12a) von ringförmiger Form aufweist, der sich radial von einem ersten ringförmigen Rand (12b), der unter der Innenfläche (7b) des Filtermediums (7) liegt, zu einem zweiten ringförmigen Umfangsrand (12c) erstreckt, der sich über die Außenfläche (7a) des Filtermediums (7) hinaus erstreckt, wobei der erste elektrische Pol (24a) und der zweite elektrische Pol (24b) des Sensors (24) durch ein Paar von Detektionselektroden definiert sind, die sich zwischen der Längsachse (X) und dem ersten ringförmigen Rand (12b) erstrecken.

3. Filter nach einem der Ansprüche 1 bis 2, wobei die leitfähige Verbindungsanordnung (28) radial zu der Innenfläche (7b) des Filtermediums (7) beabstandet ist und einen Teil des Filterelements (6; 6') bildet, indem sie an einem starren Längsbauteil (8) angebracht ist, das mit wenigstens einem aus oberem Flansch (11) und unterem Flansch (12) fest verbunden ist.

4. Filter nach Anspruch 3, wobei die leitfähige Verbindungsanordnung (28) eine Hülle (F) aufweist, die sich in Längsrichtung im Innenraum (9) von einer unteren radialen Fläche (8b) bis zu einer axialen Öffnung erstreckt, die am oberen Ende der Anordnung (28) angeordnet ist, wobei die Hülle (F) wenigstens eine radiale Öffnung umfasst und dazu ausgebildet ist, gefilterten Kraftstoff lotrecht mit dem Auslass (4b) zu leiten.

5. Filter nach einem der Ansprüche 1 bis 4, wobei die Mittel (V3, V4) zur lösbaren Befestigung des Deckels (4) derart ausgebildet sind, dass in der angebrachten Stellung des Deckels die relative Winkelstellung des Deckels zur Schale (3) einer vorbestimmten Position entspricht, und wobei das Filterelement (6) Antirotationsmittel aufweist, die eine Seitenwand (30) der Schale (3) berühren und es ermöglichen, dass das Filterelement (6) relativ zur Schale (3) geführt und/oder befestigt wird, so dass die beiden Anschlüsse (26a, 26b) mit den beiden Kontakten (C1, C2) des Deckels (4) verbunden sind.

6. Filter nach Anspruch 5, wobei die Schale (3) eine ringförmige Seitenwand (30) aufweist, die ein nicht kreisförmiges Format hat und dazu ausgebildet ist, die Antirotationsmittel durch einen dichten ringförmigen Kontakt zu führen.

7. Filter nach Anspruch 6, wobei das Filterelement (6; 6') entfernbare Verbindungselemente (39, 11b) umfasst, die dazu ausgebildet sind, mit einem rohrförmigen Einsteckelement (40) des Deckels (4) dichtend in Eingriff zu kommen und das Filterelement (6) während des Herausziehens des Filterelements aus der Schale (3) einstückig mit dem Deckel (4) zu halten, wenigstens solange die Antirotationsmittel in dichtem ringförmigen Kontakt mit der Seitenwand (30) der Schale (3) stehen.

8. Filter nach einem der Ansprüche 1 bis 4, wobei die Mittel zum lösbaren Befestigen des Deckels (4) derart konfiguriert sind, dass sie eine relative Drehung zwischen dem Deckel und der Schale (3) um eine Drehachse ermöglichen, wobei die beiden Anschlüsse (26a, 26b) der Verbindungsschnittstelle oder die beiden Kontakte (C1, C2) ringförmig und konzentrisch um die Drehachse, die mit der Längsachse (X) zusammenfällt, geformt sind oder ein Paar halbkreisförmiger Kreisbögen um die Drehachse bilden.

9. Filter nach einem der Ansprüche 1 bis 6 und 8, wobei das Filterelement (6; 6') wenigstens ein Halteelement aufweist, welches derart ausgebildet ist, dass es an der Schale (3) angreift, wobei die Verbindungsschnittstelle des Filterelements (6) dazu ausgebildet ist, sich vor dem Lösen des Halteelements von der Schale (3) von dem Deckel (4) zu lösen.

10. Filter nach einem der Ansprüche 1 bis 9, wobei die Schale (3) einen stationären Teil des Filters (1) bildet und äußere Befestigungsmittel (2a) aufweist, wodurch die Schale während eines Filterelement-Austauschvorgangs (6; 6') fest an einem Verbrennungsmotor befestigt werden kann.

11. Filtereinsatz zum Zusammenwirken in dem wasserabscheidenden Kraftstofffilter nach einem der Ansprüche 1 bis 4, der dazu ausgebildet ist, im Innenvolumen des Außengehäuses (2) des Filters angebracht zu werden, **dadurch gekennzeichnet, dass** er das Filterelement (6; 6') des wasserabscheidenden Kraftstofffilters umfasst, wobei der Filtereinsatz umfasst:
- eine leitfähige Verbindungsanordnung (28), die mit einer Verbindungsschnittstelle versehen ist;
- einen oberen Flansch (11), der mit einer zentralen Öffnung (11a) versehen ist,
- einen unteren Flansch (12), der wenigstens eine zentrale Wasserströmungsöffnung (O2) aufweist,
- ein ringförmiges Filtermedium (7), das sich um eine Längsachse (X) zwischen dem oberen Flansch (11) und dem unteren Flansch (12) erstreckt, wobei das Filtermedium (7) eine Innenfläche (7b) aufweist, die einen Innenraum (9) begrenzt,
wobei die zentrale Öffnung (11a) und die wenigstens eine zentrale Wasserströmungsöffnung (O2) von der Innenfläche (7b) radial nach innen versetzt sind,
wobei das Filterelement (6; 6') dazu geeignet ist, einen stromaufwärtigen Bereich (Z1) abzugrenzen, der mit einem Einlass für Rohkraftstoff (4a) des Filters in Verbindung steht, und einen stromabwärtigen Bereich (Z2) abzugrenzen, der mit dem Auslass für gefilterten Kraftstoff (4b) in Verbindung steht, wobei der stromabwärtige Bereich (Z2) umfasst:
- den Innenraum (9), der sich nach oben öffnet, um mit dem Auslass (4b) über die zentrale Öffnung (11a) des oberen Flansches (11) in Verbindung zu stehen; und
- eine untere Kammer (V2) im Innenvolumen des Außengehäuses (2), wobei der Innenraum (9) mit der unteren Kammer (V2) über die wenigstens eine Wasserströmungsöffnung (O2) in Verbindung steht;
wobei die leitfähige Verbindungsanordnung (28) eine Struktur ist, die umfasst:
- ein oberes Ende, das näher an dem oberen Flansch (11) als an dem unteren Flansch (12) liegt, wobei die Verbindungsschnittstelle einen Teil des oberen Endes der leitfähigen Verbindungsanordnung (28) bildet, wobei die Verbindungsschnittstelle aus elektrisch leitfähigem Material besteht und mit zwei beabstandeten Anschlüssen (26a, 26b) versehen ist, die dazu geeignet sind, eine lösbare Verbindung mit zwei Kontakten (C1, C2) des Deckels (4) des Filters zu bilden, die zueinander beabstandet sind;
- ein unteres Ende, welches den Wasserstandsensor (24) aufweist und auf der gleichen Höhe oder niedriger als der untere Flansch (12) angeordnet ist; und
- eine leitfähige Verbindung zwischen dem Wasserstandsensor (24) und der Verbindungsschnittstelle, die fest in dem Innenraum (9) angebracht ist, wobei der Sensor (24) einen ersten elektrischen Pol (24a) in Verbindung mit einem der beiden Anschlüsse (26a) aufweist und einen zweiten elektrischen Pol (24b) in Verbindung mit dem anderen der beiden Anschlüsse (26b) aufweist, wodurch der Sensor (24) dazu geeignet ist, ein Detektionssignal zu liefern, das das Vorhandensein von Wasser zwischen dem ersten elektrischen Pol und dem zweiten elektrischen Pol anzeigt.

12. Filtereinsatz nach Anspruch 11, wobei die beiden Anschlüsse (26a, 26b) der Verbindungsschnittstelle jeweils eine ebene obere Fläche zur Herstellung der lösbaren elektrischen Verbindung ohne radialen Kontakt aufweisen, wobei die Verbindungsschnittstelle Teil des oberen Endes der leitfähigen Verbindungsanordnung (28) ist, um die Übertragung des Detektionssignals von dem Sensor (24) auf den Deckel (4) des Filters in einem angebrachten Zustand des Deckels zum Verschließen des Gehäuses (2) zu ermöglichen.

## Claims

1. Water-separating fuel filter (1), comprising:
- an outer housing (2) having a cover (4) and a bowl (3), the housing defining an inner volume and having an inlet (4a) for unfiltered fuel and an outlet (4b) for filtered fuel, preferably both arranged at distance from a bottom of the housing (3a);
- a filtering element (6; 6') arranged in an upper compartment (V1) of the inner volume, the filtering element having an upper flange (11), a lower flange (12), an annular filtering medium (7) extending around a longitudinal axis (X) between the upper flange (11) and the lower flange (12), the filtering medium having an inner face (7b) which defines an inner space (9), the filtering element (6; 6') defining an upstream area (Z1) communicating with the unfiltered fuel inlet (4a) and a downstream area (Z2) communicating with the filtered fuel outlet (4b);
- an assembly (28) with conductive connection comprising an upper end, closer to the upper flange (11) than to the lower flange (12), and a lower end having a water level sensor (24) and positioned at the same level as or lower than the lower flange (12);
- a lower compartment (V2) of internal volume, in which the separated water can collect to reach the sensor (24);
- a connection interface of electrically conductive material provided with two separated terminals (26a, 26b) adapted to be detachably connected to two separated contacts (C1, C2) of the cover (4), the sensor (24) comprising a first electric pole (24a) connecting with one of the two terminals (26a) and a second electric pole (24b) connecting with the other of the two terminals (26b), to provide a detection signal representative of the presence of water between the first electric pole and the second electric pole, the connection interface being part of the upper end of the assembly (28) with conductive connection and enabling the transfer of the detection signal from the sensor to the cover (4) when the cover is in an assembled state of closing the housing (2);
**characterized in that** it comprises removable attachment means (V3, V4) so that the cover (4) is detachable from the bowl (3) and selective extraction of the filtering element is enabled, such that the filtering element is replaceable, the filtering element (6; 6') comprising the conductive connection assembly (28) with the connection interface which extends in the downstream area (Z2),
**and in that** the filtering element (6; 6') is adapted to separate out the water in the inner space (9) which communicates, at the upper flange (11) of the filtering element, with the filtered fuel outlet (4b), and at the lower flange (12) with the lower compartment (V2), said assembly (28) being positioned on the side of the water separation, extending into the inner space (9), to allow the separated and accumulated water to reach the sensor (24), i.e. in the downstream zone (Z2);
the lower flange (12) sealingly separating the upstream area (Z1) from the lower compartment (V2) and having at least one water drainage opening (02) providing communication between the inner space (9) and the lower compartment (V2).

2. Filter according to claim 1, wherein the lower flange (12) has a radial sealing portion (12a) of annular shape which extends radially from a first annular edge (12b) underlying the inner face (7b) of the filtering medium (7) to a peripheral second annular edge (12c) that extends beyond the outer face (7a) of the filtering medium (7), the first electric pole (24a) and the second electric pole (24b) of the sensor (24) being defined by a pair of detection electrodes that extend between the longitudinal axis (X) and said first annular edge (12b).

3. Filter according to any one of claims 1 to 2, wherein the assembly (28) with conductive connection is radially distanced from the inner face (7b) of the filtering medium (7) and is part of the filtering element (6; 6'), being mounted on a longitudinal rigid component (8) integral to at least one among the upper flange (11) and lower flange (12).

4. Filter according to claim 3, wherein the assembly (28) with conductive connection comprises a sleeve (F) which extends longitudinally within the inner space (9) from a radial lower face (8b) to an axial opening located at the upper end of said assembly (28), the sleeve (F) comprising at least one radial opening and being adapted for channeling the filtered fuel in alignment with the outlet (4b).

5. Filter according to any one of claims 1 to 4, wherein the means (V3, V4) for removably attaching the cover (4) are configured so that, in the mounted position of the cover, the angular position of the cover relative to the bowl (3) corresponds to a predetermined position, and wherein the filtering element (6) comprises anti-rotation means in contact with a side wall (30) of the bowl (3) and allowing the filtering element (6) to be guided and/or fixed relative to the bowl (3), so that the two terminals (26a, 26b) are connected to the two contacts (C1, C2) of the cover (4).

6. Filter according to claim 5, wherein the bowl (3) comprises an annular side wall (30) having a non-circular shape and adapted to guide the anti-rotation means by a tight annular contact.

7. Filter according to claim 6, wherein the filtering element (6; 6') comprises removable connection members (39, 11b) adapted to engage sealingly with a tubular male member (40) of the cover (4) and to keep the filtering element (6) secured to the cover (4) during extraction of the filtering element from the bowl (3), at least while the anti-rotation means are in tight annular contact with the side wall (30) of the bowl (3).

8. Filter according to any one of claims 1 to 4, wherein the means for removably attaching the cover (4) are configured to permit relative rotation between the cover and the bowl (3) about an axis of rotation, the two terminals (26a, 26b) of the connection interface or the two contacts (C1, C2) being of annular shape and concentric about the axis of rotation which is coincident with said longitudinal axis (X) or forming a pair of circular arcs of semicircular shape around said axis of rotation.

9. Filter according to any one of claims 1 to 6 and 8, wherein the filtering element (6; 6') comprises at least one retaining member adapted to engage with the bowl (3), said connection interface of the filtering element (6) being adapted to detach from the cover (4) before said retaining member is disengaged from the bowl (3).

10. Filter according to any one of claims 1 to 9, wherein the bowl (3) forms a stationary portion of the filter (1) and comprises external attachment means (2a), by which the bowl can be fixedly secured to an internal combustion engine during replacement of the filtering element (6; 6').

11. Filtering insert for cooperating in the water-separating fuel filter according to any one of claims 1 to 4, adapted to be mounted into the inner volume of the outer housing (2) of said water-separating fuel filter, so that the filtering insert comprises:
- an assembly (28) with conductive connection, provided with a connection interface;
- an upper flange (11) provided with a center hole (11a);
- a lower flange (12) having at least one water drainage center opening (02);
- an annular filtering medium (7) extending around a longitudinal axis (X) between the upper flange (11) and the lower flange (12), the filtering medium (7) having an inner face (7b) which defines an inner space (9),
the center hole (11a) and the at least one water drainage center opening (02) being offset radially inwards with respect to the inner face (7b), the filtering element (6; 6') being adapted to define an upstream area (Z1) communicating with a unfiltered fuel inlet (4a) of said filter and a downstream area (Z2) communicating with the filtered fuel outlet (4b), considering the downstream area (Z2) includes:
- the inner space (9) that opens from above to communicate with the outlet (4b) via the center hole (11a) of the upper flange (11); and
- a lower compartment (V2) in the internal volume of the outer housing (2), the inner space (9) communicating with the lower compartment (V2) via the at least one water drainage opening (02);
the assembly (28) with conductive connection being a structure that comprises:
- an upper end, closer to the upper flange (11) than to the lower flange (12), the connection interface being part of the upper end of the assembly (28) with conductive conduction, the connection interface being made of electrically conductive material and provided with two spaced terminals (26a, 26b) adapted to be detachably connected to two separated contacts (C1, C2) of the cover (4) of said filter which are spaced from each other;
- a lower end having said water level sensor (24) and positioned at the same level as or lower than the lower flange (12); and
- a lower compartment (V2) of internal volume, in which the separated water can collect to reach the sensor (24);
- a conductive connection between the water level sensor (24) and the connection interface, fixedly mounted in the inner space (9), the water level sensor (24) comprising a first electric pole (24a) in connection with one of the two terminals (26a) and a second electric pole (24b) in connection with the other one of the two terminals (26b), whereby the sensor (24) is capable of providing a detection signal representative of the presence of water between the first electrical pole and the second electrical pole.

12. Filtering insert according to claim 11, wherein the two terminals (26a, 26b) of the connection interface have each a planar upper face to perform the removable electrical connection without ant radial contact, the connection interface being part of said upper end of the assembly (28) with conductive connection to allow transfer of the detection signal from said sensor (24) to the cover (4) of said filter in an assembled state of the cover to close the housing (2).
